# FASCICULE DE BREVET EUROPEEN

(11) **EP 3 150 452 B1**
(45) Date de publication et mention de la délivrance du brevet: **22.08.2018**
(21) Numéro de dépôt: 16186848.4
(22) Date de dépôt: 01.09.2016
(51) Int. Cl.: B60W 10/18, B60W 50/02, B60W 10/20

(54) **TEST D'UNE FONCTION DE CONTROLE DE LA TRAJECTOIRE D'UN VEHICULE AVEC LES FREINS SANS COMMANDE DU VOLANT**
FUNKTIONSTEST ZUR KONTROLLE DER BEWEGUNGSBAHN EINES FAHRZEUGS MIT BREMSEN OHNE STEUERUNG DES LENKRADS
TEST OF A FUNCTION FOR CONTROLLING THE TRAJECTORY OF A VEHICLE USING THE BRAKES WITHOUT CONTROLLING THE STEERING WHEEL

(30) Priorité: 01.10.2015 FR 1559331
(43) Date de publication de la demande: 05.04.2017
(73) Titulaire: PSA Automobiles SA, 78300 Poissy (FR)
(72) Inventeur: GIROD A PETIT LOUIS, Adrien, 78960 Voisins le Bretonneux (FR); OHAYON, Emmanuel, 78370 Plaisir (FR)

(56) Documents cités:
- EP-A2- 1 616 746
- DE-A1- 10 242 123
- DE-T5-112010 006 048
- FR-A1- 2 914 260

## Description

La présente invention concerne un procédé de contrôle de la trajectoire d'un véhicule automobile avec les freins des roues en l'absence de commande de la direction, ainsi qu'un véhicule automobile équipé de moyens mettant en oeuvre un tel procédé.

Les véhicules automobiles comportent généralement un système de direction comprenant un volant entraînant par une colonne de direction un boîtier situé à sa base, qui transmet de chaque côté du véhicule un mouvement transversal à une biellette équipée de rotules à ses extrémités. En particulier le boîtier peut comporter une crémaillère disposée transversalement.

Le train avant du véhicule comporte de chaque côté un porte-moyeu pouvant pivoter suivant un axe de pivot sensiblement vertical, disposé à proximité du centre de la roue, qui reçoit le mouvement transversal de la biellette pour faire pivoter cette roue autour de l'axe de pivot et assurer la direction.

Les systèmes de direction peuvent être équipés d'une assistance utilisant une énergie électrique ou hydraulique, qui délivre sur le boîtier de direction une partie du couple nécessaire pour le braquage des roues directrices, complétant celui fourni par le conducteur.

Par ailleurs les véhicules peuvent être équipés d'un système d'aide à la conduite pour le contrôle de trajectoire appelé « ESP » (Electronic Stability Program), possédant une source autonome de pression hydraulique, qui à partir d'une information sur la trajectoire suivie par le véhicule donnée par différents capteurs, comparée à celle demandée par le conducteur manoeuvrant le volant, agit de manière automatique sur certains freins de roue pour générer un moment de lacet autour de l'axe vertical passant par le sens de gravité du véhicule. On fait ainsi pivoter le véhicule afin de rétablir la trajectoire souhaitée si le système d'aide à la conduite constate une dérive. Le document DE 11 2010 006 048 T5 décrit un procédé de test d'une fonction de contrôle de la trajectoire d'un véhicule automobile tel que défini par le préambule de la revendication 1. En cas de défaillance du système de direction, notamment un blocage de cette direction, ou une panne de l'assistance venant par exemple de l'alimentation en courant d'une assistance électrique ou du système de contrôle électronique de cette assistance, un procédé de stabilisation du véhicule connu, présenté notamment par le document US-B2-7519464, utilise un système de contrôle de la trajectoire du type ESP pour assurer la direction du véhicule.

Un autre procédé connu de contrôle de trajectoire en cas de défaillance du système de direction, présenté notamment par le document FR-A1-2914260, comporte l'application sur le différentiel du train avant moteur du véhicule, d'un couple de freinage sur le côté intérieur du virage et d'un couple moteur sur le côté extérieur, pour générer sur les roues avant une différence de force longitudinale assurant la direction du véhicule.

Ces deux procédés délivrent des forces longitudinales qui génèrent un moment de lacet du véhicule autour de son centre de gravité, assurant une trajectoire du véhicule.

Cependant pour ces procédés, la géométrie particulière de la direction du véhicule peut générer aussi des couples sur le braquage de chaque roue avant entraînant une rotation du volant de direction, ce braquage s'additionnant au moment de lacet venant des forces longitudinales de freinage des roues.

Pour une direction autonome du véhicule assurée par le freinage des roues, les couples de braquage pouvant s'appliquer dans un sens ou dans l'autre, posent des problèmes s'ils ne sont pas connus de manière précise, et pris en compte dans les calculs.

En effet la géométrie de la direction du véhicule peut évoluer, en particulier dans le cas de changements de roues, par exemple en installant des pneumatiques prévus pour une saison avec des jantes comprenant des dimensions différentes.

Lors du contrôle de la trajectoire par le freinage, dans le cas d'une réaction du véhicule qui diffère de celle attendue, cet écart nécessite des boucles de correction du calculateur mettant en oeuvre les circuits hydrauliques de freinage présentant une dynamique lente. Le retard mis dans ces corrections peut rendre la trajectoire difficilement contrôlable, et entraîner des accidents.

La présente invention a notamment pour but d'éviter ces inconvénients de la technique antérieure.

Elle propose à cet effet un procédé de test d'une fonction de contrôle de la trajectoire d'un véhicule automobile en l'absence de commande de la direction de ce véhicule, utilisant un système d'aide à la conduite effectuant un contrôle de la trajectoire à partir d'une action individuelle sur les freins de roue, la direction du véhicule comportant une assistance qui peut piloter cette direction, ce procédé étant remarquable en ce qu'au cours du roulage du véhicule il applique un freinage d'une roue avant, et en fonction de son effet sur le braquage de la direction il pilote l'assistance de direction pour délivrer un couple inverse s'opposant à ce braquage afin de maintenir la direction dans l'état, et il enregistre des valeurs de ce pilotage d'assistance dépendant du freinage appliqué.

Un avantage de ce procédé de contrôle est que le test effectué périodiquement permet de connaître de manière simple, efficace et précise l'effet sur la direction d'un freinage d'une roue avant à partir de l'état réel du véhicule, prenant en compte notamment des changements récents sur ce véhicule comme des modifications des roues avant. Le procédé peut ensuite établir directement les pressions optimums de freinage des différentes roues prenant en compte le couple sur le volant donné par la géométrie réelle de la direction.

On obtient alors même après des modifications du véhicule, une rapidité de réaction du contrôle de trajectoire atteignant directement son objectif par la prise en compte d'un couple additionnel du volant de direction, qui assure la sécurité.

Le procédé de contrôle de la trajectoire selon l'invention peut de plus comporter une ou plusieurs des caractéristiques suivantes, qui peuvent être combinées entre elles.

Avantageusement, le procédé de test applique sensiblement le freinage maximum possible de la roue avant, dans la limite de l'adhérence des roues.

Avantageusement, le procédé de test demande un test de manière périodique. La mise à jour des valeurs de pilotage de l'assistance est ainsi assurée de manière régulière.

Dans ce cas, en particulier le procédé peut demander un test après des périodes constantes de kilométrage parcouru par le véhicule.

Le procédé de test peut informer le conducteur quand il va effectuer un test sur le véhicule.

Le procédé de test peut aussi se déclencher après une demande d'un opérateur. On peut en particulier effectuer ce test lors d'une opération de maintenance du véhicule.

Avantageusement, le procédé de test enregistre la valeur du couple délivré par l'assistance de direction lors de son pilotage.

L'invention a aussi pour objet un véhicule automobile équipé de moyens mettant en oeuvre un procédé de test d'une fonction de contrôle de la trajectoire en l'absence de commande de la direction de ce véhicule, ce procédé de test comportant l'une quelconque des caractéristiques précédentes.

En particulier, le véhicule automobile peut être équipé d'une assistance de direction qui est électrique.

En particulier, le véhicule automobile peut comporter un mode de conduite autonome.

L'invention sera mieux comprise et d'autres caractéristiques et avantages apparaîtront plus clairement à la lecture de la description ci-après donnée à titre d'exemple, en référence aux dessins annexés dans lesquels :
- la figure 1 est un schéma synoptique d'un système d'aide à la conduite pour le contrôle de la trajectoire du véhicule avec les freins de roue ;
- la figure 2 présente sur un schéma vu de dessus les efforts sur le véhicule généré par les freinages des roues intérieures, ne prenant pas en compte les effets sur la direction ;
- la figure 3 est un schéma de la roue avant droite vue de l'arrière, présentant le déport au sol du pivot de roue par rapport à l'axe vertical de cette roue ;
- la figure 4 est un schéma de la roue avant droite vu de dessus, présentant les bras de levier de la géométrie de la direction ;
- la figure 5 présente les efforts sur le véhicule générés par un freinage d'une roue avant intérieure, comprenant les effets sur la direction ; et
- la figure 6 présente les efforts sur le véhicule générés par un freinage des roues avant et arrière intérieures, comprenant les effets sur la direction.

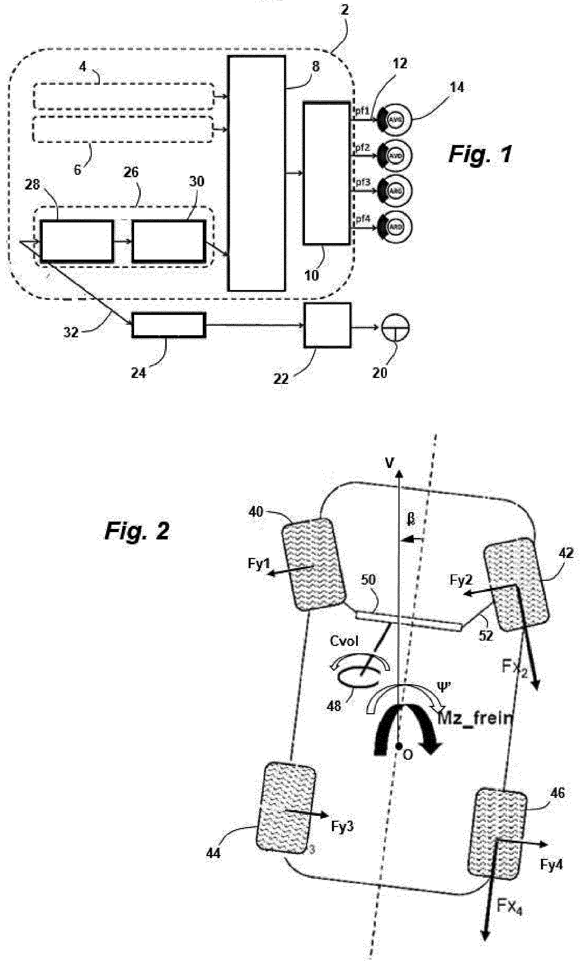

La figure 1 présente un système d'aide à la conduite comportant un système de contrôle de trajectoire du véhicule 2, comprenant une première fonction d'antiblocage des freins « ABS » 4 (Anti-lock Braking System) et une deuxième fonction de contrôle de stabilité du véhicule « ESP » 6 (Electronic Stability Program), qui sont en relation avec une fonction d'arbitrage 8 contrôlant les différentes accélérations du véhicule et réalisant les arbitrages.

Suivant les besoins du véhicule, notamment pour éviter un blocage des roues ou une déviation de trajectoire, la fonction d'arbitrage 8 envoie des consignes de freinage individuel de chaque roue à une fonction bas niveau 10, qui délivre à partir d'une pompe hydraulique une pression individuelle 12 sur chaque frein de roue 14.

Un volant de direction 20 équipé d'une assistance 22 qui peut être électrique ou hydraulique, comporte un capteur d'angle volant 24.

Lors d'une défaillance de la commande de direction 20 venant par exemple d'une panne de son assistance 22, comme un défaut d'un capteur ou de la fourniture d'énergie, une fonction de mode de défaillance 26 du système de contrôle de trajectoire 2 échange des informations 32 avec le système de direction pour appliquer un contrôle de trajectoire.

En variante le contrôle de trajectoire peut être aussi appliqué sur un véhicule à conduite autonome en cas de défaillance de la commande de direction.

Dans ce cas la fonction mode de défaillance 26 calcule alors un moment de lacet à établir pour assurer la trajectoire du véhicule, qu'il délivre à la fonction d'arbitrage 8 appliquant par la fonction bas niveau 10 les pressions individuelles 12 sur les freins de roue 14.

La figure 2 présente un véhicule comportant un volant de direction 48 agissant sur une crémaillère transversale 50 comportant à chaque extrémité une biellette de direction 52 qui fait pivoter une roue avant 40, 42. Le véhicule avance à la vitesse V, qui forme un angle de dérive β avec son axe longitudinal. Chaque roue a une vitesse particulière.

En l'absence de couple sur le volant 48 qui est lâché, on applique un freinage donnant une force longitudinale Fx2 sur la roue avant droite 42, Fx3 sur la roue arrière gauche 44 et Fx4 sur la roue arrière droite 46. Ces différentes forces longitudinales génèrent un moment de lacet Mz-frein sur le véhicule.

Le moment de lacet Mz-frein applique une force transversale sur chaque roue Fy1, Fy2, Fy3, Fy4.

Il résulte de la somme des différentes forces longitudinales Fx et transversales Fy sur les quatre roues du véhicule, une accélération angulaire de ce véhicule autour de son centre de gravité O. En multipliant le moment d'inertie du véhicule autour du centre de gravité O par l'accélération angulaire, et en ajoutant la vitesse angulaire donnée par le braquage des roues avant directrices 40, 42, on obtient la vitesse de lacet du véhicule Ψ' qui le fait pivoter.

En particulier le freinage des roues droite 42, 46 donne un moment de lacet Mz-frein qui fait pivoter le véhicule vers la droite, et le freinage des roues gauche 40, 44 donne un moment de lacet dans l'autre sens.

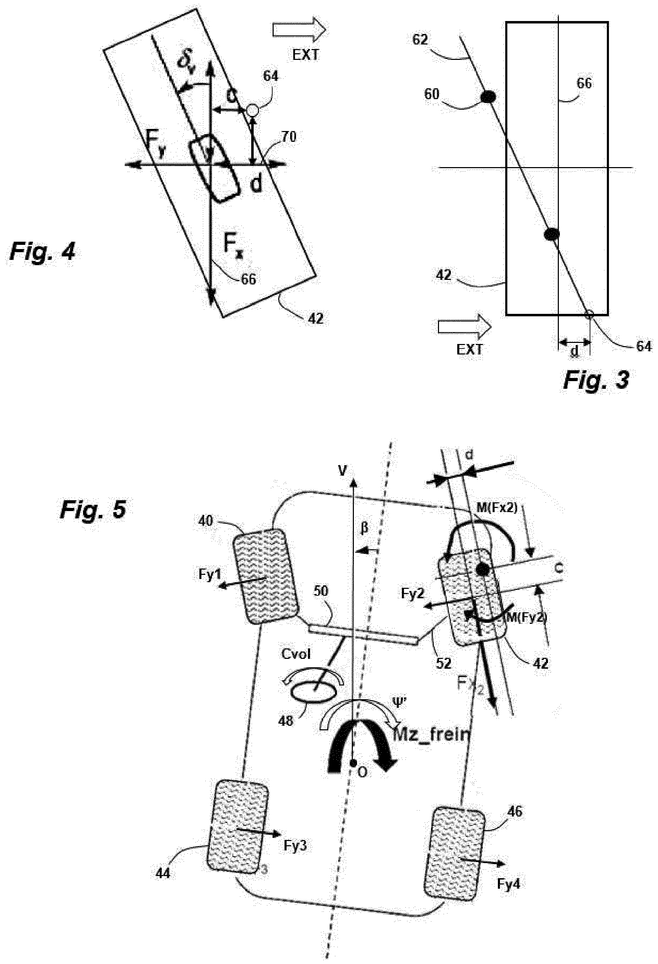

Les figures 3 et 4 présentent la roue avant droite 40 maintenue par deux rotules 60, définissant un axe de pivot incliné 62 passant par les centres de ces rotules, permettant un braquage de la roue δ. L'axe de pivot 62 comporte une géométrie présentant une inclinaison dans la direction transversale, ainsi que dans la direction longitudinale en formant l'angle de chasse.

Le bras de levier du déport latéral au sol d est la distance transversale entre le plan médian vertical 66 de la roue 40, et le point d'intersection au sol de l'axe de pivot 64. Le bras de levier latéral d est négatif si le plan médian de la route 66 est à l'intérieur par rapport au point d'intersection 64, comme présenté sur les schémas. Dans ce cas un freinage de la roue 40 donne une force longitudinale Fx vers l'arrière qui tend à braquer la direction de l'autre côté du véhicule.

Le bras de levier du déport longitudinal au sol c représentatif de la chasse au sol, est la distance longitudinale entre le plan axial vertical de la roue 70, et le point d'intersection au sol de l'axe de pivot 64. Ce bras de levier longitudinal c est positif si le point d'intersection 64 est devant le plan axial de la roue 70. Dans ce cas une force transversale Fy vers l'intérieur du véhicule, tend à braquer la direction de ce côté du véhicule.

Chaque bras de levier c, d multiplié par la force longitudinale Fx ou transversale Fy appliquée par la route sur la roue, génère un couple de rotation de cette roue autour de son axe de pivot 62 dans un sens ou dans l'autre.

On a alors lors des freinages individuels des roues mis en oeuvre par le système de contrôle de trajectoire 2, pour une roue avant 40, 42 un couple de rotation autour de l'axe de pivot 62 dépendant de la géométrie de la direction, des deux forces Fx, Fy appliquées sur cette roue et de l'angle de braquage de la roue δ. Ces couples de rotation génèrent une force transversale globale sur la crémaillère du boîtier de direction 50.

En retirant de la force transversale sur la crémaillère du boîtier de direction 50, les forces de frottement dans ce boîtier, et en prenant en compte le rayon du pignon de la crémaillère, on obtient un couple généré sur le volant Cvol.

L'action sur le boîtier de direction 50 des deux forces transversales donne une rotation du volant s'il est libre, et un braquage additionnel des roues avant 40, 42 dans un sens ou dans l'autre.

Lors d'un contrôle de trajectoire du véhicule par le freinage individuel des roues, le braquage additionnel peut aller dans le sens du virage obtenu par le couple de lacet donné par le freinage des roues Mz-frein, ou au contraire s'opposer à ce sens.

Il est donc intéressant de connaître à l'avance la valeur de la rotation additionnelle du volant 48 résultant d'un certain freinage des différentes roues, pour ajuster ces freinages en fonction de cette rotation prévue, afin d'obtenir de manière rapide les meilleures valeurs. On notera que les différents frottements dans la direction s'opposant au mouvement, réduisent les effets des forces transversales appliquées sur le boîtier de direction 50, et la valeur du couple résultant sur le volant Cvol.

On améliore ainsi la réactivité du système de contrôle de trajectoire, comprenant une dynamique assez lente à cause notamment du temps de réponse des circuits hydrauliques, en évitant des boucles d'itérations de son fonctionnement qui demandent du temps, et peuvent apporter un risque de perte de contrôle complet de la trajectoire.

La figure 5 présente pour réaliser un moment de lacet Mz-frein qui tend à faire pivoter le véhicule vers la droite, le freinage de la roue avant droite 42 générant une force longitudinale sur cette roue Fx2.

La force longitudinale Fx2 et les forces transversales Fy1, Fy2 appliquées sur les roues avant génèrent en fonction des bras de levier c, d, un couple sur le volant Cvol qui peut tendre à braquer les roues dans le sens du virage ou dans le sens opposé.

En pratique on peut constater sur des véhicules de gamme supérieure une plage du déport transversal au sol d allant d'une valeur faiblement positive, environ 2mm, à une valeur fortement négative, environ -23mm, et une plage de la chasse au sol c comprise entre deux valeurs fortement positives, environ 24 et 27mm. On obtient avec ces véhicules un couple sur le volant Cvol dans une plage comprenant des valeurs positives et négatives.

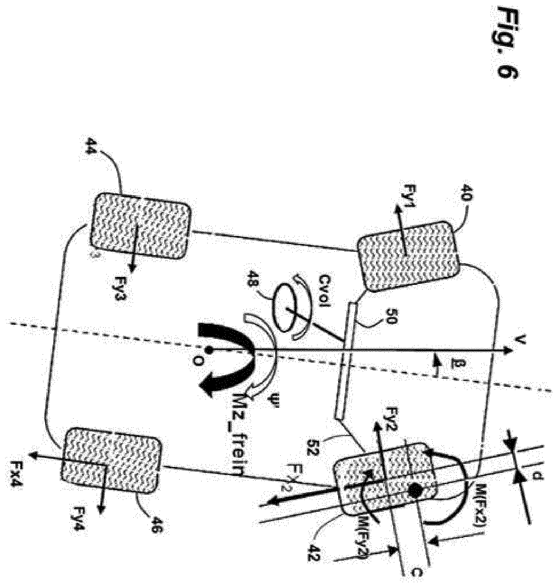

La figure 6 présente pour réaliser le même moment de lacet Mz-frein qui tend à faire pivoter le véhicule vers la droite, une répartition du freinage sur la roue avant droite 42 correspondant à un coefficient r du moment de lacet compris entre 0 et 1, et sur la roue arrière droite 46 correspondant au coefficient 1-r de ce moment de lacet. La somme des freinages des deux roues droite 40, 42 donne bien le moment de lacet complet Mz-frein.

Le freinage sur la roue arrière est limité en fonction de l'adhérence au sol afin d'éviter un dérapage de cette roue, le coefficient de répartition r ne peut pas être trop faible. En pratique avec une bonne adhérence de la route, le coefficient de répartition r n'est pas inférieur à environ 0,6.

Le freinage sur la roue avant droite 42 étant réduit, on obtient une force transversale appliquée sur la crémaillère de direction 50 qui est diminuée, et un couple sur le volant Cvol diminué aussi.

Le couple sur le volant Cvol entraîne une rotation du volant dans un sens présentant une amplitude dépendant de la valeur de ce couple, qui peut être mesurée notamment par le capteur d'angle volant 24.

Le procédé de contrôle de trajectoire suivant l'invention va utiliser cette particularité pour effectuer des tests permettant de connaître les effets de la géométrie de la direction sur le couple sur le volant Cvol, permettant d'anticiper un contrôle des freins en prenant en compte dès le départ ce couple afin d'obtenir plus rapidement les bonnes pressions de freinage sur chaque roue donnant la trajectoire souhaitée, avec un minimum de corrections.

Le procédé de contrôle de la trajectoire va aussi utiliser le couple généré sur le volant Cvol pour réaliser un braquage des roues avant s'ajoutant au couple de lacet donné par les freins, afin d'effectuer le virage demandé.

Différentes stratégies sont utilisables avec le procédé de contrôle selon l'invention, notamment pour des véhicules équipés de systèmes d'aide à la conduite, appelés aussi « ADAS » (Advanced Driver Assistance Systems), ou de systèmes de conduite autonome, dans le cas de défaillance d'un organe qui entraîne la nécessité d'assurer une trajectoire avec les freins du véhicule, en utilisant notamment une fonction de contrôle de stabilité du type « ESP ».

Ces stratégies permettent de prendre en compte les effets directs et réels sur la direction pour un véhicule dans l'état dans lequel il se trouve, quelles que soient les modifications apportées dans le passé à ce véhicule, pour obtenir au plus vite les bons ajustements des freinages donnant la trajectoire demandée.

On a pour toutes ces stratégies en premier un calcul du moment de lacet Mz-frein correspondant au virage à effectuer.

Une première stratégie calcule d'abord la consigne de pression à appliquer uniquement sur la roue avant intérieure du véhicule 42 pour obtenir le couple de lacet demandé Mz-frein, puis effectue ce freinage.

Si au cours du freinage la rotation du volant de direction est dans le sens du virage à effectuer, cette action est positive pour aider le véhicule a tourner, et on maintient alors la totalité de ce freinage de la roue avant intérieure 42. On réalise alors seulement un ajustement du couple de lacet demandé par les freins Mz-frein pour tenir compte de l'effet positif de la rotation du volant.

Si la rotation du volant de direction est dans le sens opposé au virage à effectuer, cette action est négative. On décide alors de baisser la pression sur la roue avant intérieure 42 de manière à réduire cet effet négatif, pour en transférer une partie sur la roue arrière intérieure 46 ce qui modifie l'effet sur la rotation du volant. La somme des freinages des deux roues intérieures 42, 46 est calculée pour obtenir le même couple de lacet demandé Mz-frein, en tenant compte d'une éventuelle rotation du volant.

L'état réel du véhicule peut être modifié à tout moment, en particulier lors de changements de roues avant, notamment pour monter des pneumatiques été ou hiver comprenant des jantes différentes, par exemple des jantes en tôle à la place de jantes en aluminium avec une géométrie différente.

Le procédé de test selon l'invention vérifiant l'état du véhicule, applique au cours du roulage du véhicule un freinage d'une roue avant 40, 42, et en fonction de son effet sur le braquage de la direction, pilote l'assistance de direction 22 pour délivrer un couple inverse s'opposant à ce braquage afin de maintenir la direction dans l'état. Le procédé enregistre ensuite des valeurs de ce pilotage d'assistance dépendant du freinage appliqué.

Avantageusement le procédé de test applique le freinage maximum possible sur la roue avant 40, 42, dans la limite d'adhérence de cette roue, ce qui permet d'obtenir un effet important sur le braquage de la direction.

En particulier on enregistre alors la valeur du couple Cvol délivré par l'assistance de direction 22 lors de son pilotage, qui est mise en relation avec le niveau de freinage. On peut aussi enregistrer des valeurs de rotation du volant 48, données par le capteur d'angle volant 24. Ces valeurs sont généralement disponibles sur un réseau multiplexé d'informations du véhicule, du type « CAN ».

Le procédé de test peut être appliqué périodiquement pour tester l'état du véhicule et la géométrie de sa direction, par exemple lors du roulage après un kilométrage parcouru, de manière automatique, ou après une demande du système au conducteur qui doit l'accepter afin d'être prévenu. On peut effectuer par exemple le test après chaque période de 2000km. Ce test peut aussi être effectué par un professionnel maîtrisant l'opération, par exemple lors du passage du véhicule en révision chez un concessionnaire.

On enregistre alors les résultats obtenus par le test afin de les garder en mémoire, et de les utiliser dès la mise en oeuvre d'un contrôle de la trajectoire suivant, afin d'obtenir aussitôt les meilleures valeurs de contrôle des freins.

On notera que ce procédé de test d'une fonction de contrôle de la trajectoire nécessite seulement des compléments de logiciels dans un calculateur d'un système d'aide à la conduite, ce qui représente un coût réduit.

## Revendications

1. Procédé de test d'une fonction de contrôle de la trajectoire d'un véhicule automobile en l'absence de commande de la direction de ce véhicule, utilisant un système d'aide à la conduite (2) effectuant un contrôle de la trajectoire à partir d'une action individuelle sur les freins de roue (14), la direction du véhicule comportant une assistance (22) qui peut piloter cette direction, **caractérisé en ce qu'**au cours du roulage du véhicule il applique un freinage d'une roue avant (40, 42), et en fonction de son effet sur le braquage de la direction il pilote l'assistance de direction (22) pour délivrer un couple inverse s'opposant à ce braquage afin de maintenir la direction dans l'état, et il enregistre des valeurs de ce pilotage d'assistance dépendant du freinage appliqué.

2. Procédé de test selon la revendication 1, **caractérisé en ce qu'**il applique sensiblement le freinage maximum possible de la roue avant (40, 42), dans la limite de l'adhérence des roues.

3. Procédé de test selon la revendication 1 ou 2, **caractérisé en ce qu'**il demande un test de manière périodique.

4. Procédé de test selon la revendication 3, **caractérisé en ce qu'**il demande un test après des périodes constantes de kilométrage parcouru par le véhicule.

5. Procédé de test selon la revendication 3 ou 4, **caractérisé en ce qu'**il informe le conducteur quand il va effectuer un test sur le véhicule.

6. Procédé de test selon l'une quelconque des revendications précédentes, **caractérisé en ce qu'**il se déclenche après une demande d'un opérateur.

7. Procédé de test selon l'une quelconque des revendications précédentes, **caractérisé en ce qu'**il enregistre la valeur du couple (Cvol) délivré par l'assistance de direction (22) lors de son pilotage.

8. Véhicule automobile équipé de moyens mettant en oeuvre un procédé de test d'une fonction de contrôle de la trajectoire en l'absence de commande de la direction de ce véhicule, **caractérisé en ce que** procédé de test est selon l'une quelconque des revendications précédentes.

9. Véhicule automobile selon la revendication 8, **caractérisé en ce qu'**il est équipé d'une assistance de direction (22) qui est électrique.

10. Véhicule automobile selon la revendication 8 ou 9, **caractérisé en ce qu'**il comporte un mode de conduite autonome.

## Patentansprüche

1. Prüfverfahren einer Funktion zur Bahnsteuerung eines Kraftfahrzeugs in Abwesenheit einer Bedienung des Lenkrads dieses Fahrzeugs unter Verwendung eines Fahrassistenzsystems (2), das eine Bahnsteuerung mittels einer einzelnen Betätigung der Radbremsen (14) durchführt, wobei die Lenkung des Fahrzeugs eine Unterstützung (22) umfasst, die diese Lenkung steuern kann, **dadurch gekennzeichnet, dass** diese Funktion während der Fahrt des Fahrzeugs ein Vorderrad (40, 42) bremst und in Abhängigkeit von der Wirkung der Bremsung auf den Lenkeinschlag die Lenkunterstützung (22) steuert, um ein diesem Lenkeinschlag entgegengesetztes Drehmoment zu liefern und die Lenkung in ihrer Position zu halten, und Werte dieser von der ausgeübten Bremsung abhängigen Steuerung der Lenkunterstützung speichert.

2. Prüfverfahren nach Anspruch 1, **dadurch gekennzeichnet, dass** es im Wesentlichen die maximal mögliche Bremsung des Vorderrads (40, 42) innerhalb der Grenze der Radhaftung anwendet.

3. Prüfverfahren nach Anspruch 1 oder 2, **dadurch gekennzeichnet, dass** es periodisch eine Prüfung verlangt.

4. Prüfverfahren nach Anspruch 3, **dadurch gekennzeichnet, dass** es eine Prüfung nach gleichen Kilometerleistungen des Fahrzeugs verlangt.

5. Prüfverfahren nach Anspruch 3 oder 4, **dadurch gekennzeichnet, dass** es den Fahrer darüber informiert, wann es eine Prüfung an dem Fahrzeug durchführen wird.

6. Prüfverfahren nach einem der vorstehenden Ansprüche, **dadurch gekennzeichnet, dass** es auf Anforderung durch einen Bediener ausgelöst wird.

7. Prüfverfahren nach einem der vorstehenden Ansprüche, **dadurch gekennzeichnet, dass** es den Wert des von der Lenkunterstützung (22) während ihrer Steuerung gelieferten Drehmoments (Cvol) speichert.

8. Kraftfahrzeug mit Mitteln zur Durchführung eines Verfahrens zur Prüfung einer Bahnsteuerungsfunktion in Abwesenheit einer Bedienung des Lenkrads dieses Fahrzeugs, **dadurch gekennzeichnet, dass** es sich um ein Prüfverfahren nach einem der vorstehenden Ansprüche handelt.

9. Kraftfahrzeug nach Anspruch 8, **dadurch gekennzeichnet, dass** es mit einer elektrischen Lenkunterstützung (22) ausgestattet ist.

10. Kraftfahrzeug nach Anspruch 8 oder 9, **dadurch gekennzeichnet, dass** es einen autonomen Fahrmodus umfasst.

## Claims

1. Method for testing a control function of a motor vehicle trajectory in the absence of a steering control of this vehicle, using a driving assistance system (2) that controls the trajectory from an individual action on the wheel brakes (14), with the steering of the vehicle comprising a power steering (22) system, which can control this steering, **characterised by** the fact that while the vehicle is in motion it applies a braking of a front wheel (40, 42), and according to the effect thereof on the steering angle it controls the power steering (22) in order to deliver a reverse torque that opposes this counter-steering in order to maintain the direction as is, and it records the values of this assisted driving depending on the braking applied.

2. Test method according to claim 1, **characterised by** the fact that it substantially applies the maximum braking possible of the front wheel (40, 42), within the adhesion limit of the wheels.

3. Test method according to claim 1 or 2, **characterised by** the fact that it requests a test periodically.

4. Test method according to claim 3, **characterised by** the fact that it requests a test after constant mileages travelled by the vehicle.

5. Test method according to claim 3 or 4, **characterised by** the fact that it informs the driver when a test will be conducted on the vehicle.

6. Test method according to any of the preceding claims, **characterised by** the fact that it is triggered after a request from an operator.

7. Test method according to any of the preceding claims, **characterised by** the fact that it records the torque value (Cvol) delivered by the power steering (22) during the control thereof.

8. Motor vehicle provided with means implementing a method for testing a trajectory control function in the absence of a steering control of this vehicle, **characterised by** the fact that the test method is according to any of the preceding claims.

9. Motor vehicle according to claim 8, **characterised by** the fact that it is provided with an electric power steering (22).

10. Motor vehicle according to claim 8 or 9, **characterised by** the fact that it comprises a self-driving mode.
